# EUROPEAN PATENT APPLICATION

(11) **EP 1 600 645 A1**
(43) Date of publication of application: **30.11.2005**
(21) Application number: 05010830.7
(22) Date of filing: 19.05.2005
(51) Int. Cl.: F16B 37/06, F16B 5/04

(54) **Insulating fastener**

(30) Priority: 28.05.2004 JP 2004159902
(71) Applicant: Newfrey LLC, Newark, Delaware 19711 (US)
(72) Inventor: Takenouchi, Masayuki, Noyori-cho Toyohashi-shi Aichi-ken (JP)
(74) Representative: Haar, Lucas Heinz Jörn

(57) **Abstract**

To provide a fastener for fastening a first component and second component to each other and electrically insulate them from each other while maintaining the advantages of a blind nut able to fasten the first component and second component securely from one side.

The fastener (3) consists of a blind nut (1) and a bush (2). The blind nut (1) consists of a nut (9) with female threading (7) integrated with a tube (10) and a flange (13). The tube (10) can be deformed so as to expand the diameter of the portion inserted into a mounting hole in the first component (5) as far as the back side of the component. The bush (2) is ring-shaped and made of an insulating material so as to surround the outer periphery of the tube (10) adjacent to the flange (13). A circumferential groove (18) is formed in the periphery of the bush (2) into which edge of a mounting hole in the second component (6) is fitted and engaged. Thus, a portion of the tube (10) can be deformed to expand its diameter to interpose and support the first component (5) between the deformed portion (26) and the flange (13), so that the first and second components are connected mechanically to each other in an electrically insulated state.

## Description

The present invention relates to a fastener for electrically insulating and mechanically connecting a first component such as an electrode to a second component such as a casing in a wiring board or battery.

In a wiring board or battery, a first component such as an electrode has to be mechanically fastened to a second component such as a casing while remaining electrically insulating from the second component or casing so that voltage or an electric current can be supplied from the outside. In order to obtain such a connection, a ring-shaped insulating rubber bush is attached to the mounting hole in the second component or casing, an insulating spacer is interposed with the second component, the first component or electrode is brought into contact with the bush or insulating spacer, a nut is arranged on the back side of the first component, a bolt is inserted into the hollow portion of the bush or insulating spacer from the second component side, the bolt is screwed into the nut, and the first component is fastened to the second component.

The fastening method is to position a nut on the back surface of the second component with a bush or insulating spacer between the first component and second component, and to screw a bolt into the second component. This required operation is difficult for a single worker to perform.

In Patent Document 1, Unexamined Utility Model Appl. Publication No. 58-22509 (Examined Utility Model Appl. Publication No. 60-35779), blind nut is disclosed consisting of a nut with internal female threading integrated with a hollow tube and an open flange formed at the end of the tube. Here, the tube can be inserted into mounting holes in the first and second components, the tube can be deformed and enlarged diametrically with respect to the first and second components opposite the flange to interpose the first and second components between the deformed portion and the flange and to fasten both components. This blind nut can fasten a plurality of components between the deformed portion and the flange when the tube is deformed and expanded diametrically by the strong screwing action of the fastening tool or screw mandrel into the nut from the opening in the flange. As a result, the entire operation can be performed from the same side. The nut is supported from the back side, a complicated fastening operation is greatly improved, and components large in area can be fastened together from one side. However, while the first and second components are fastened together mechanically, Patent Document 1 does not mention the mechanical fastening together of the first and second components while keeping them insulated from each other electrically.

The blind nut disclosed in Patent Document 2, Unexamined Utility Model Appl. Publication No. 59-116618, (Examined Utility Model Appl. Publication No. 62-34026), fastens the first and second components to each other mechanically but does not fasten the first and second components together mechanically while keeping them insulated from each other electrically. In Patent Document 2, a ring (12) is interposed between the flange and the fastened member, but strong fastening force cannot be provided for the fastened component. Patent Document 3, Unexamined Utility Model Appl. Publication No. 5-59000discloses a vibration resistant mechanism that prevents vibrations generated by a rotating fan from being communicated to the fan bracket. A ring-shaped grommet made from a vibration resistant material and formed in a peripheral groove on the outer peripheral surface is attached to the mounting hole for the fan, a bolt is inserted into the grommet, and bolt is screwed into the mounting hole in the bracket. Because the nut is formed in the grommet, the nut is not provided with support. If the nut cannot be formed in the bracket, the nut can receive support from the back side of the bracket but the bolt has to be screwed in from the front of the fan.

Therefore, the purpose of the present invention is to provide a fastener for fastening a first component and second component to each other and electrically insulate them from each other while maintaining the advantages of a blind nut able to fasten the first component and second component securely from one side.

In order to achieve this purpose, the present invention is a fastener for electrically insulating and mechanically fastening a first component and second component, wherein a blind nut comprises a nut with internal female threading formed therein integrated with a hollow tube and an open flange formed at the end of the tube, wherein the tube can be inserted into a mounting hole in the first component, wherein the tube can be deformed and enlarged diametrically with respect to the first component opposite the flange, wherein the blind nut includes a ring-shaped bush made of an insulating material so as to surround the outer periphery of the tube adjacent to the flange, wherein a circumferential groove is formed in the periphery of the bush into which the edge of a mounting hole in the second component is fitted and engaged when the second component is inserted into the mounting hole in the second component, and wherein a potion of the tube in the blind nut is deformed to expand diametrically in order to interpose and support the first component between the deformed portion and the flange with the edge of the mounting hole in the second component fitted into the peripheral groove in the bush, the tube of the blind nut inserted into the hollow portion of the bush, the flange adjacent to the bush, and the tube inserted into the mounting hole in the first component, thereby fastening the first and second components mechanically in an electrically insulated state.

This fastener is able to strongly fasten a first component and second component to each other mechanically and electrically insulate them from each other while maintaining the advantages of a blind nut, allowing the first component and second component to be fastened each other from one side.

In the fastener, the bush preferably has a large diameter portion coming into contact with the entire bottom surface of the blind nut so as to ensure electrical insulation between the flange and the second component. Preferably, the bush is also made of a vibration-resistant material to prevent the transmission of vibrations between the first and second components. Also, the first component can be an electrode, the second component can be a casing, and a bolt can be screwed into the nut to connect a wire to the electrode so as to enable the supply of voltage or an electric current.

The following is an explanation of an embodiment of the present invention with reference to the drawings, wherein:
- FIG 1: is a plane view of the blind nut for the fastener in the first embodiment of the present invention,
- FIG 2: is a semi-cross sectional front view of the blind nut in FIG 1,
- FIG 3: is a semi-cross sectional front view of the bush for the fastener in the first embodiment of the present invention,
- FIG 4: is a semi-cross sectional front view of the fastener in the first embodiment of the present invention.
- FIG 5: is a semi-cross sectional front view of a first component and second component fastened together using the fastener in FIG 4.

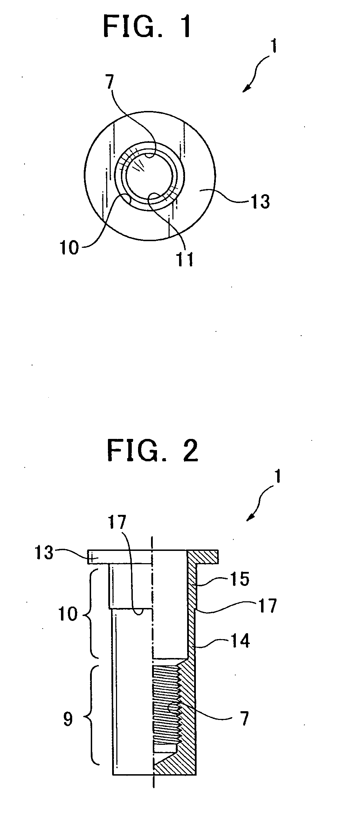

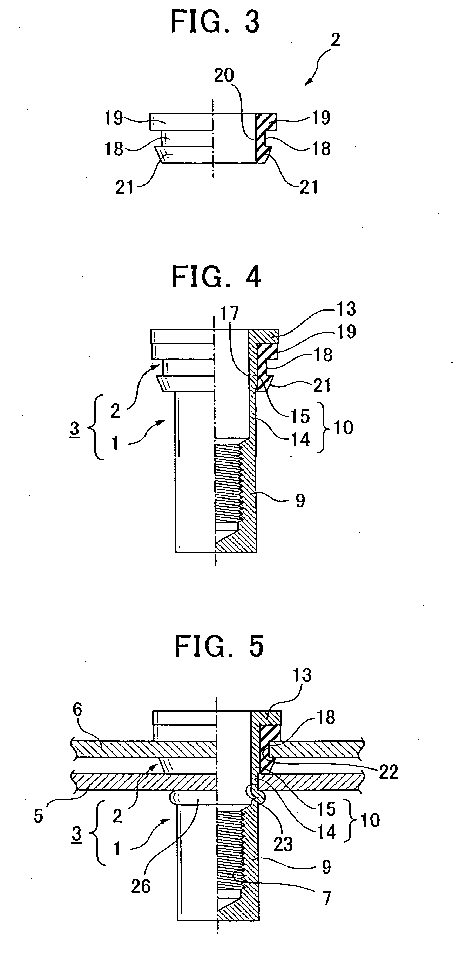

FIG 1 and FIG 2 show the blind nut 1 for the fastener in the first embodiment of the present invention. FIG 3 shows the bush 2 for the fastener in the first embodiment of the present invention. FIG 4 shows the fastener 3 in the embodiment of the present invention with the bush 2 attached to the blind nut 1. FIG 5 shows a first component 5 such as an electrode fastened to a second component 6 such as a wiring board or battery casing using fastener 3.

In FIG 1 and FIG 2, the blind nut 1 is an integrated product made from a deformable material. The material of the blind nut 1 is generally a deformable metal such as aluminum or steel. However, it can also be made of a deformable material other than a metal. The blind nut 1 also has to be made of a conductive material to establish an electrical connection with the first component 5. The blind nut 1 consists of a nut 9 with internal female threading 7, a thin hollow tube 10, and a flange 13 with an opening 11 formed in the center at the end of the tube. The tube 10, as shown in the drawings, has a thin portion 14 on the nut end with an outer diameter able to allow for insertion into the mounting hole in the first component and a thick portion 15 on the flange end with a bush 2 surrounding its outer periphery. The outer diameter of the thin portion 147 is somewhat smaller than the diameter of the mounting hole in the first component 5. A tier 17 is formed in the border portion, and the insertion of the tube 10 into the first component 5 mounting hole is stopped and positioned by the tier 17.
Because the thin portion 14 is thinnest in the thin tube 10 of the flange nut 1, the portion of the threading 7 in the nut 9 screwed by the mandrel fastening tool (not shown) is forcibly pulled towards the flange 13, to deform and expand the outer diameter of the thin portion 14. The inner diameter of the hollow tube 10 is greater than the inner diameter of the threading 7 in the nut 9 and somewhat larger than the outer diameter of the bolt to allow the bolt to be inserted and screwed into the threading 7.

As shown in FIG 3, the bush 2 is formed in a hollow ring shape of a constant axial height and radial thickness. The bush 2 is formed integrally of an electrically insulating material. The bush 2 should also be made of a vibration resistant material to prevent the transmission of vibrations. An ideal material is an electrically insulating natural or synthetic rubber. It should also be flexible and elastic so as to be easily mounted in the mounting hole of the second component and form a seal (water-tight seal) after mounting. The bush 2 is formed in a hollow ring shape with an inner diameter and height (the height should be somewhat longer than the thick portion 15 to compress after mounting and provide a water-tight seal) able to entirely surround the outer periphery of the thick portion 15 of the tube 10 in the blind nut 1. A circumferential groove 18 is formed in the outer peripheral surface of the bush 2 so the edge of the mounting hole in the second component can be fitted into it in the center height position when mounted in the mounting hole of the second component. The inner diameter of the circumferential groove 18 is equal or somewhat smaller than the inner diameter of the mounting hole in the second component, and the outer diameter of the upper and lower portions of the circumferential groove 18 are somewhat larger than the inner diameter of the mounting hole in the second component so that the edge of the mounting hole in the second component fits securely in the circumferential groove 18. The portion 19 adjacent to the flange 13 above the circumferential groove 18 is formed as the large diameter portion with a diameter nearly the same as the flange 13 and comes into contact with the entire bottom surface of the flange to reliably insulate the flange 13 and second component. The portion 21 adjacent to the thin portion 14 of the tube 10 below the circumferential groove 18 is tapered to allow the bush 2 to be inserted into the mounting hole of the second component and become gradually smaller in diameter downwards. A hole 20 with an inner diameter nearly the same as the outer diameter of the thick portion 15 is formed in the center of the bush 2 to come into contact with the thick portion 15 of the tube 10 in the blind nut 1 and to keep the bush 2 from falling off the blind nut 1.

FIG 4 shows the fastener 1 with the bush 2 attached to the blind nut 1. The bush 2 is attached to as to surround the outer periphery of the thick portion 15 of the tube 10 in the blind nut 1 and the large portion 19 of the bush is arranged near the flange 13. During use, the bush 2 is inserted into the mounting hole in the second component 6 with the bush 2 attached to the blind nut 1 so the fastener 1 can be attached to the second component. However, the bush is removed from the blind nut 1, the bush 2 is inserted into the mounting hole of the second component alone, the circumferential groove 18 is fitted into the edge of the mounting hole, and the nut 9 and tube 10 in the blind nut 1 are inserted into the bush 2 attached to the second component and attached.

FIG 5 explains how a first component 5 such as an electrode can be fastened to a second component 6 such as a wiring board or battery casing using a fastener 1 with this configuration. The blind nut 1 is inserted from the opening in the flange 13 into the screw mandrel extending from the nose of the fastening tool (not shown), the threading 7 of the nut 9 is screwed in, and the blind nut 1 is mounted on the screw mandrel of the fastening tool. The blind nut 1 is held at the nose of the fastening tool with the nut 9 of the blind nut 1 extending outward. The bush 2 can be mounted on the blind nut 1 or removed from the blind nut 1 and inserted into the mounting hole 22 in the second component 6 to attach it to the second component 6 beforehand. In this case, there is no bush 2 on the blind nut 1.

The worker uses the fastening tool to push the blind nut 1 into the mounting hole 22 in the second component 6 with the nut 9 on the blind nut 1 going first. If the bush 2 is attached to the blind nut 1 at this time, the bush 2 is pushed into the mounting hole 22 in the second component 6 with the blind nut 1 to fit the edge of the mounting hole 22 in the second component 6 into the circumferential groove 18.
If the bush 2 has been attached to the second component 6 beforehand, the blind nut 1 is pushed into the mounting hole 22 in the second component 6 with the nut 9 going first and attached so that the thick portion 15 of the tube 10 is surrounded. In either case, the nut 9 in the blind nut 1 is inserted into the mounting hole 23 in the first component 5 and pushed in so that the thick portion 14 of the tube 10 extends to the back end of the first component 5. It stops when the tier 17 at the boundary of the thin portion 14 and thick portion 15 of the tube 10 comes into contact with the edge of the mounting hole 23 in the first component 5. At this time, the surface at the bottom end of the bush 2 comes into contact with the first component 5.

When the fastening tool is operated, the screw mandrel at the nose of the tool is pulled out axially with strong force towards the rear (and is rotated so that the mandrel is screwed into the threading 7). This lifts the nut 9 connected to the screw mandrel towards the flange 9. The strong lifting force applied from the nut 9 to the thin portion 14 of the tube 10 deforms the thin portion 14 of the tube 10 so that the diameter expands at the back end of the first component 5. As shown in FIG 5, the deformed portion 26 with the expanded diameter is formed around the entire periphery of the tube 9 at the back end of the first component 6. This strongly interposes the bush 2 and the first component 5 between the deformed portion 26 with the expanded diameter and the flange 13. Because the second component 6 is mounted with the bush 2, the first component 5 and the second component 6 are mechanically fastened to each other with a bush 2 made of an electrically insulating material interposed between them. In other words, a first component 5 such as an electrode is firmly fastened to a second component 6 such as a casing in an electrically insulated state. If the bush 2 is also made of a vibration resistant material, vibrations from a second component 6 such as a casing are not transmitted to a first component 5 such as an electrode and vice versa. If the bush 2 is also made of an elastic material such as rubber, it can provide a strong water-tight seal for the mounting hole 22 in the second component 6. This is ideal in the case of a battery for preventing fluid leaks.

As shown in FIG 5, after a first component 5 such as an electrode has been firmly secured to a second component 6 such as a casing in an electrically insulating state, a bolt (not shown) can be inserted into the nut 9 in the blind nut 1 from the opening in the flange 13 and screwed into the nut 9. If the bolt connects an electrical wire to a first component 5 such as an electrode, voltage or electric current can be supplied to the first component 5.

Here, the fastening operation was performed using a fastening tool. However, a press can also be used. If fastened mechanically and insulated electrically, the present invention can be applied to electric devices other than wiring boards and batteries and to testing devices such as testers.

## Claims

1. A fastener for electrically insulating and mechanically fastening a first component (5) and second component (6), wherein a blind nut (1) comprises a nut (9) with internal female threading formed therein integrated with a hollow tube (10) and an open flange (13) formed at the end of the tube (10), wherein the tube (10) can be inserted into a mounting hole (23) in the first component (5), wherein the tube (10) can be deformed and enlarged diametrically with respect to the first component (5) opposite the flange (13), wherein the blind nut (1) includes a ring-shaped bush (2) made of an insulating material so as to surround the outer periphery of the tube (10) adjacent to the flange (13), wherein a circumferential groove (18) is formed in the periphery of the bush (2) into which the edge of a mounting hole (22) in the second component (6) is fitted and engaged when the bush (2) is inserted into the mounting hole (22) in the second component (6), and wherein a portion of the tube (10) in the blind nut (9) is deformed to expand diametrically in order to interpose and support the first component (5) between the deformed portion and the flange (13) with the edge of the mounting hole (22) in the second component (6) fitted into the peripheral groove (18) in the bush (2), the tube (10) of the blind nut (9) inserted into the hollow portion of the bush, the flange (13) adjacent to the bush (2), and the tube (10) inserted into the mounting hole (23) in the first component (5), thereby fastening the first and second components mechanically in an electrically insulated state.

2. The fastener described in claim 1, wherein the bush (2) has a large diameter portion (19) coming into contact with the entire bottom surface of the blind nut so as to ensure electrical insulation between the flange (13) and the second component (6).

3. The fastener described in claim 2, wherein the bush (2) is made of an electrically insulating and vibration resisting material.

4. The fastener described in any one of the claims from claim 1 through claim 3, wherein the first component (5) is an electrode, the second component (6) is a casing, and a bolt is screwed into the nut (9) to connect a wire to the electrode so as to enable the supply of voltage or an electric current.
